# FASCICULE DE BREVET EUROPEEN

(11) **EP 2 860 591 B1**
(45) Date de publication et mention de la délivrance du brevet: **16.07.2025**
(21) Numéro de dépôt: 14184284.9
(22) Date de dépôt: 10.09.2014
(51) Int. Cl.: G04B 15/14, G04B 17/06, G04B 13/02, F16B 21/20

(54) **Système d'assemblage utilisant un élément de blocage élastique conique**
Montagesystem, bei dem ein konisches elastisches Blockierelement verwendet wird
Assembly system using a conical resilient locking member

(30) Priorité: 09.10.2013 EP 13187836
(43) Date de publication de la demande: 15.04.2015
(73) Titulaire: Nivarox-FAR S.A., 2400 Le Locle (CH)
(72) Inventeur: Stranczl, Marc, 1260 Nyon (CH); Mallet, Daniel, 25500 Le Bélieu (FR); Verardo, Marco, 2336 Les Bois (CH)
(74) Mandataire: Collé, Emmanuel

(56) Documents cités:
- EP-A1- 1 705 533
- EP-A1- 2 273 322
- CH-A2- 703 961
- DE-U1- 202008 011 371
- FR-A- 1 259 251
- FR-A- 419 826
- FR-A1- 2 531 156
- GB-A- 1 035 315
- JP-A- S5 181 907

## Description

### Domaine de l'invention

L'invention se rapporte à un système d'assemblage utilisant un élément de blocage élastique conique permettant l'assemblage d'une pièce dont le matériau ne comporte pas de domaine plastique utilisable, c'est-à-dire avec un domaine plastique très restreint, avec un organe comportant un autre type de matériau.

### Arrière-plan de l'invention

Les assemblages actuels comportant une pièce à base de silicium sont généralement solidarisés par collage. Une telle opération nécessite une extrême finesse d'application ce qui la rend coûteuse.

Le document EP 2 273 322 divulgue un assemblage avec une pièce intermédiaire se déformant plastiquement entre la portée d'un axe et des logements d'une pièce en silicium pour rendre solidaire l'assemblage.

Le document EP 1 705 533 divulgue un assemblage avec un capot comportant des ergots destinés à être reçus dans des logements d'une pièce en silicium pour rendre solidaire l'assemblage.

Le document CH 703 961 divulgue un assemblage avec un capot muni d'un anneau en caoutchouc se déformant élastiquement contre une pièce en silicium pour plaquer la pièce en silicium contre la portée d'un axe.

Le document FR 419 826 divulgue un assemblage avec une pièce intermédiaire munie de deux épaulements et chassée sur un axe, un premier épaulement recevant le balancier et le deuxième épaulement recevant la virole du spiral.

Le document GB 1 035 315 divulgue une fixation d'une cheville traversant le trou d'une plaque à l'aide de l'emboutissage d'un anneau plastique sur la partie traversante de la cheville.

Le document FR 1 259 251 divulgue une fixation d'une pièce munie d'une tige traversant le trou d'une plaque à l'aide de l'emmanchement à force d'un anneau en élastomère sur la tige de la pièce.

### Résumé de l'invention

Le but de la présente invention est de pallier tout ou partie les inconvénients cités précédemment en proposant un assemblage sans colle capable de solidariser une pièce dont le matériau ne comporte pas de domaine plastique avec un organe comportant un matériau ductile comme, par exemple, un métal ou un alliage métallique

A cet effet, l'invention se rapporte à un système d'assemblage selon la revendication 1 annexée.

La configuration du système permet avantageusement de solidariser l'ensemble organe - pièce - élément de blocage voire rondelle blocage sans collage avec un organe habituel à la précision maîtrisée tout en garantissant que la pièce ne subisse pas d'efforts destructifs même si elle est formée, par exemple, à partir d'un matériau à base de silicium. En effet, la Demanderesse a été surprise de pouvoir solidariser l'ensemble organe - pièce-rondelle notamment en rotation relative avec une si grande simplicité structurelle car les préjugés de résistance mécanique des pièces notamment à partir d'un matériau à base de silicium obligeaient jusqu'à maintenant à ne surtout pas fournir d'effort axial sur une pièce à base de matériau ne comportant pas ou peu de domaine plastique.

Conformément à d'autres caractéristiques avantageuses de l'invention :
- le troisième matériau comporte un métal ou un alliage métallique dont la résistance à la relaxation, après 10'000 heures à une température de 70°C, est au moins égale à 50% de la force appliquée représentant 75% de la contrainte nécessaire à obtenir 0,2% de déformation plastique du troisième matériau afin de maintenir la solidarisation de l'ensemble organe - pièce - élément de blocage ;
- le troisième matériau comporte du cuivre, du laiton, du maillechort, de l'alliage Cu-Be;
- la section selon un plan de coupe axial de l'élément de blocage comporte un rapport de la hauteur par rapport à la largeur compris entre 0,1 et 5 ;
- la section selon un plan de coupe axial de l'élément de blocage comporte un rapport de la largeur de la partie qui s'évase par rapport à la largeur totale compris entre 0,1 et 0,95 ;
- la section selon un plan de coupe axial de l'élément de blocage comporte un rapport de la hauteur de la partie qui s'évase par rapport à la hauteur totale compris entre 0,1 et 0,95 ;
- la paroi interne de l'élément de blocage comporte, symétriquement à la partie sensiblement droite, une deuxième partie qui s'évase de manière conique en s'éloignant de la partie sensiblement droite ;
- l'élément de blocage est chanfreiné afin d'éviter tout bris du deuxième matériau ;
- le deuxième matériau est à base de silicium comme du silicium, du quartz, de l'oxyde de silicium, du nitrure de silicium ou carbure de silicium ;
- ledit au moins un premier matériau comporte un métal ou un alliage métallique ;
- l'axe et la portée sont venus de forme.

De plus, l'invention se rapporte à une pièce d'horlogerie caractérisée en ce qu'elle comporte au moins un système d'assemblage selon l'une des variantes précédentes, la pièce ne comportant pas de domaine plastique pouvant être une roue, une ancre ou un spiral.

Enfin, l'invention se rapporte à un procédé de fabrication d'un système d'assemblage selon la revendication 14 annexée.

Le procédé de la revendication 14 permet avantageusement de rendre solidaire simplement, élastiquement et sans déplacement relatif possible l'ensemble organe - pièce - élément de blocage, voire rondelle. En effet, de manière avantageuse selon l'invention, seul un élément de blocage est rapporté et déformé pour induire un pincement périphérique uniquement élastique. On comprend également qu'un tel procédé permet de solidariser l'ensemble organe - pièce - élément de blocage en s'adaptant aux dispersions de fabrication des différents constituants.

Enfin, de manière étonnante, l'effort axial exercé par la partie périphérique de l'élément de blocage lors du procédé n'engendre pas de bris du deuxième matériau à base de matériau ne comportant pas ou peu de domaine plastique. Cet avantage technique permet de simplifier considérablement le montage de pièce à base de matériau ne comportant pas ou peu de domaine plastique sur un axe pivotant. On comprend notamment qu'il n'est pas nécessaire de prévoir de colle, de capot de verrouillage supplémentaire ou de formes complémentaires en recouvrement pour solidariser les pièces entre elles et, notamment, quant aux déplacements relatifs autour de l'axe de rotation de l'axe pivotant.

Conformément à d'autres caractéristiques avantageuses de l'invention :
- l'étape d) est arrêtée lorsque la force appliquée par ledit outil est comprise entre 20% et 90% de la contrainte de limite élastique du troisième matériau ;
- le troisième matériau comporte un métal ou un alliage métallique dont la résistance à la relaxation, après 10'000 heures à une température de 70°C, est au moins égale à 50% de la force appliquée lors de l'étape d) représentant 75% de la contrainte nécessaire à obtenir 0,2% de déformation plastique du troisième matériau afin de maintenir la solidarisation de l'ensemble organe - pièce - élément de blocage ;
- le troisième matériau comporte du cuivre, du laiton, du maillechort ou de l'alliage Cu-Be ;
- la section selon un plan de coupe axial de l'élément de blocage comporte un rapport de la hauteur par rapport à la largeur compris entre 0,1 et 5 ;
- la section selon un plan de coupe axial de l'élément de blocage comporte un rapport de la largeur de la partie qui s'évase par rapport à la largeur totale compris entre 0,1 et 0,95 ;
- la section selon un plan de coupe axial de l'élément de blocage comporte un rapport de la hauteur de la partie qui s'évase par rapport à la hauteur totale compris entre 0,1 et 0,95 ;
- la paroi interne de l'élément de blocage comporte, symétriquement à la partie sensiblement droite, une deuxième partie qui s'évase de manière conique en s'éloignant de la partie sensiblement droite ;
- l'élément de blocage est chanfreiné afin d'éviter tout bris du deuxième matériau ;
- le deuxième matériau est à base de silicium comme du silicium, du quartz, de l'oxyde de silicium, du nitrure de silicium ou carbure de silicium ;
- ledit au moins premier matériau comporte un métal ou un alliage métallique ;
- la pièce est un mobile d'horlogerie, une ancre d'horlogerie ou un spiral d'horlogerie.

### Description sommaire des dessins

D'autres particularités et avantages ressortiront clairement de la description qui en est faite ci-après, à titre indicatif et nullement limitatif, en référence aux dessins annexés, dans lesquels :
- la figure 1 est une vue en perspective d'un élément de blocage selon l'invention ;
- la figure 2 est une vue en coupe selon un plan axial d'un élément de blocage de la figure 1 ;
- la figure 3 est une représentation graphique de la force appliquée lors du procédé en fonction de la position axiale de l'outil exerçant ladite force ;
- les figures 4 à 8 sont des vues schématiques en coupe d'étapes successives du procédé selon l'invention ;
- la figure 9 est une vue en coupe selon un plan axial d'un élément de blocage selon une alternative de la figure 2 ;
- les figures 10 et 11 sont des vues schématiques partielles d'un mouvement horloger comportant des systèmes d'assemblage selon l'invention.

### Description détaillée des modes de réalisation préférés

Comme expliqué ci-dessus, l'invention se rapporte à un système d'assemblage d'une pièce dont le matériau ne comporte pas de domaine plastique utilisable, c'est-à-dire avec un domaine plastique très restreint, avec un organe comportant un autre type de matériau.

Ce système d'assemblage a été imaginé pour des applications dans le domaine horloger. Toutefois, d'autres domaines peuvent parfaitement être imaginés comme notamment l'aéronautique, la bijouterie, l'automobile ou les arts de la table.

Dans le domaine horloger, cet assemblage est rendu nécessaire par la part croissante que tiennent les matériaux fragiles comme ceux à base de silicium tel que le silicium monocristallin (ou polycristallin) dopé ou non, l'oxyde de silicium comme du quartz ou de la silice, du corindon monocristallin ou polycristallin ou plus généralement de l'alumine, le nitrure de silicium et le carbure de silicium. On peut, à titre d'exemple, envisager de former le spiral, le balancier, l'ancre, les ponts ou même les mobiles comme les roues d'échappement totalement ou partiellement à base de matériaux fragiles.

Toutefois, le fait de toujours pouvoir utiliser des axes habituels en acier dont la fabrication est maîtrisée, est une contrainte qui est difficile à concilier avec l'utilisation de pièces ne comportant pas de domaine plastique. En effet, lors de tests effectués, le chassage d'un axe en acier est impossible et brise systématiquement les pièces fragiles, c'est-à-dire ne comportant pas de domaine plastique utilisable. Par exemple, il est apparu que le cisaillement généré par l'entrée de l'axe métallique dans l'ouverture d'une pièce en silicium brise systématiquement cette dernière.

C'est pourquoi, l'invention se rapporte à un système d'assemblage 1, 101, 121, 201 comportant un organe 3, 103, 123, 203 en au moins un premier matériau comportant un axe 2, 102, 122, 202 et une portée 4, l'axe 2 de l'organe étant reçu dans l'ouverture 6 d'une pièce 5, 105, 205 en un deuxième matériau à base de matériau ne comportant pas ou peu de domaine plastique.

On comprend donc que l'axe 2, 102, 122, 202 et la portée 4 peuvent être venus de forme à l'aide d'un unique premier matériau ou que l'axe 2, 102, 122, 202 et la portée 4 de l'organe 3, 103, 123, 203 peuvent être formés à partir de plusieurs matériaux et/ou plusieurs parties.

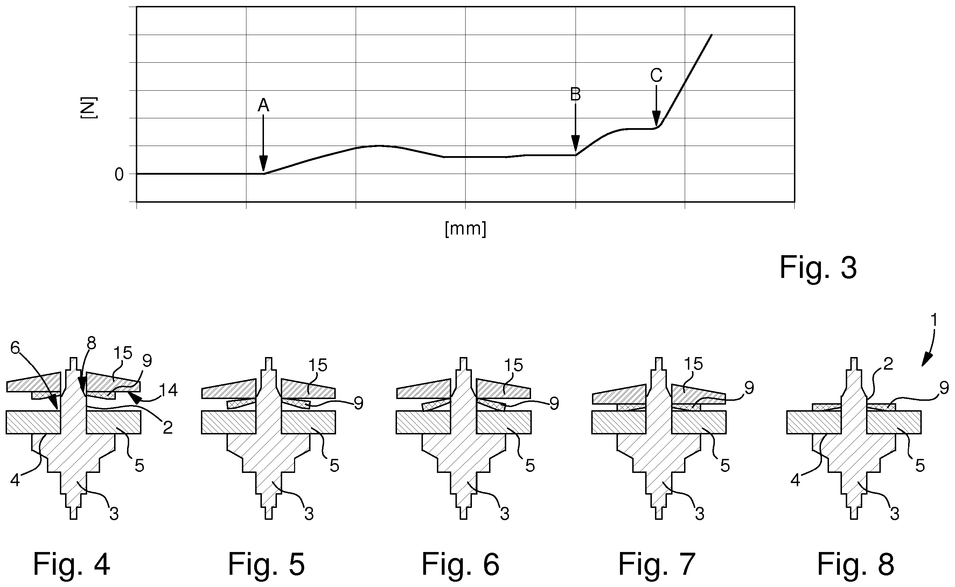

Avantageusement selon l'invention, le système d'assemblage 1, 101, 121, 201 comporte un élément de blocage 9, 19, 109, 129, 209 en un troisième matériau agencé pour attacher élastiquement la pièce 5, 105, 205 entre la portée 4 de l' organe 3, 103, 123, 203 et l'élément de blocage 9, 19, 109, 129, 209. Comme mieux visible à la figure 8, avantageusement selon l'invention, la pièce 5 est pincée contre la portée 4 de l'organe 3 par la force élastique de l'élément de blocage 9. On comprend immédiatement la simplicité du système d'assemblage 1, 101, 121, 201 selon l'invention qui ne nécessite pas de colle, de capot de verrouillage supplémentaire, de formes complémentaires en recouvrement ou encore de déformation plastique comme du fluage.

Selon l'invention, l'élément de blocage 9, 19, 109, 129, 209 est une rondelle comportant une paroi interne comprenant une partie sensiblement droite 10, 20 sur une partie H_{T}-H_{E} de la hauteur H_{T} de l'élément de blocage 9, 19, 109, 129, 209 qui serre radialement l'axe 2, 102, 122, 202 de l'organe 3, 103, 123, 203, la paroi interne comportant, adjacente à la partie droite 10, 20, une partie 16, 26 qui s'évase de manière conique en se rapprochant de la pièce 5, 105, 205 en un deuxième matériau afin que seule la partie périphérique 12, 13, 22, 23 de l'élément de blocage 9, 19, 109, 129, 209 exerce une force axiale et élastique à l'aplomb de la portée 4 de l'organe 3, 103, 123, 203 afin de rendre solidaire l'ensemble organe 3, 103, 123, 203 - pièce 5, 105, 205- élément de blocage 9, 19, 109, 129, 209.

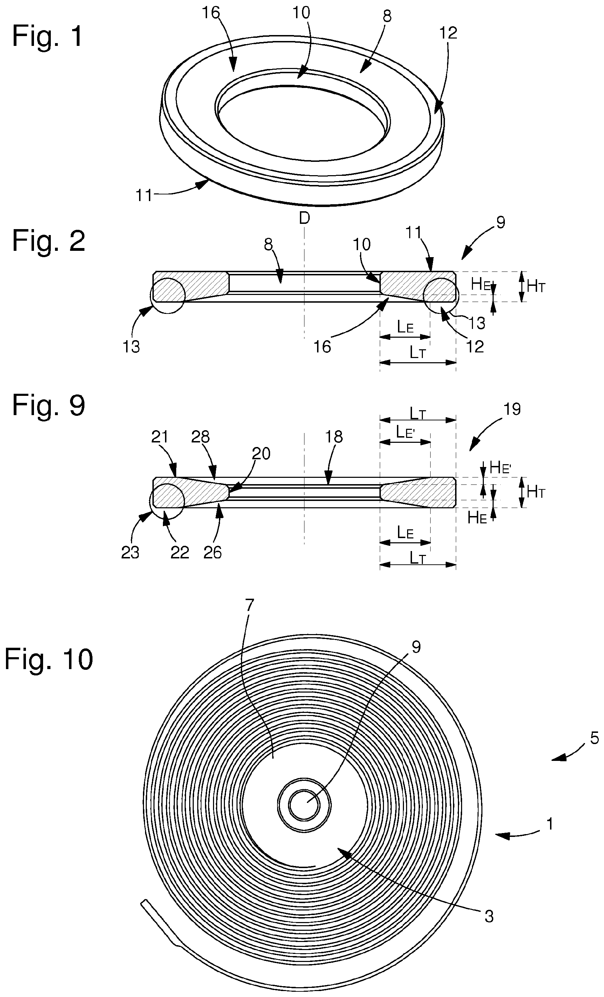

Aux figures 1 et 2, on peut également voir que l'élément de blocage 9, 19, 109, 129, 209 comporte une surface supérieure 11 destinée à entrer en contact avec un outil préférentiellement plat 15 et une surface inférieure 12 destinée à entrer en contact avec la surface supérieure de la pièce 5, 105, 205.

En effet, comme expliqué ci-dessous, de manière étonnante, l'effort axial exercé par la partie périphérique 12, 13, 22, 23 de l'élément de blocage 9, 19, 109, 129, 209 lors du procédé n'engendre pas de bris du deuxième matériau à base de matériau ne comportant pas ou peu de domaine plastique. Cet avantage technique permet de simplifier considérablement le montage de pièce 5, 105, 205 sur un axe 2, 102, 122, 202, par exemple, pivotant. Cet avantage est notamment obtenu car la partie périphérique 12, 13, 22, 23 de l'élément de blocage 9, 19, 109, 129, 209 appuie sur la portée 4 et pas en porte-à-faux de la portée 4. Il est donc important que la surface de l'élément de blocage 9, 19, 109, 129, 209 n'excède pas celle de la portée 4.

Dans l'exemple illustré aux figures 1 et 2, l'élément de blocage 9 est asymétrique, c'est-à-dire que les surfaces 11 et 12 ne peuvent être indifféremment celle supérieure ou inférieure. Toutefois, cette asymétrie n'est qu'optionnelle.

En effet, selon une autre variante illustrée à la figure 9, appliquée préférentiellement pour éviter les erreurs de manipulation lors de la fabrication, l'élément de blocage 19 peut également être symétrique. Dans cette variante la paroi interne autour du trou 18 comporte, symétriquement à la partie droite 20, une première partie 26 qui s'évase de manière conique et une deuxième partie 28 qui s'évase de manière conique en s'éloignant l'une et l'autre de la partie droite 20.

Le montage élastique de l'élément de blocage 9, 19, 109, 129, 209 est avantageusement obtenu en utilisant un troisième matériau qui comporte un métal ou un alliage métallique dont la résistance à la relaxation est au moins égale à 50% de la force appliquée. Les tests permettant de déterminer ce pourcentage ont été effectués après 10'000 heures à une température de 70°C et sous une force de 75% de la contrainte nécessaire à obtenir 0,2% de déformation plastique, c'est-à-dire sensiblement 75% de la limite élastique du troisième matériau.

Cette résistance supérieure à 50% a été observée quand le troisième matériau comporte du cuivre, du laiton, du maillechort, de l'alliage arcap et même supérieure à 85% quand le troisième matériau comporte de l'alliage pfinodal, de l'alliage spinodal, de l'alliage durnico, de l'alliage durimphy, de l'alliage Cu-Be et de l'acier 20AP.

Pour des considérations propres à l'horlogerie, l'élément de blocage 9, 19, 109, 129, 209 est, de manière encore plus préférée, choisi parmi les matériaux ci-dessus qui ne possèdent pas de propriétés ferromagnétiques afin d'être peu sensibles aux champs magnétiques, c'est-à-dire le cuivre, le laiton, le maillechort, l'alliage arcap, l'alliage pfinodal, l'alliage spinodal, l'alliage Cu-Be et l'alliage durimphy.

Comme mieux visible aux figures 1 et 2, préférentiellement selon l'invention, la section selon un plan de coupe axial de l'élément de blocage 9, 19, 109, 129, 209 comporte un rapport (H_{T}/L_{T}) de la hauteur H_{T} par rapport à la largeur L_{T} compris entre 0,1 et 5. Ainsi, il est important de bien choisir la longueur L_{T} pour avoir une partie périphérique 12, 13, 22, 23 suffisamment éloignée du centre de l'axe D pour obtenir un bras de levier suffisamment élevé pour offrir un pincement suffisant à la solidarisation. Dans le même temps, une hauteur H_{T} doit être également bien choisie pour avoir une hauteur minimale pour suffisamment protéger le deuxième matériau à base de matériau ne comportant pas ou peu de domaine plastique et une hauteur maximale pour toujours obtenir la déformation intermédiaire expliquée ci-dessous. On comprend donc que le rapport H_{T}/L_{T} doit être adapté suivant les applications prévues.

De plus, la géométrie de la partie évasée 16, 26 de l'élément de blocage 9, 19, 109, 129, 209 donne également la possibilité de personnaliser la hauteur H_{E} et la largeur L_{E} sur lesquelles la partie 16, 26 s'évase à partir de la partie droite 10, 20. On comprend immédiatement que la partie périphérique 13, 23 en contact avec la pièce 5, 105, 205 peut être ainsi directement limitée à la face inférieure 12, 22 par la valeur de la largeur L_{E} choisie pour la partie évasée 16, 26.

Préférentiellement, la section selon un plan de coupe axial de l'élément de blocage 9, 19, comme visible aux figures 2 et 9, comporte un rapport (H_{E}/H_{T}) de la hauteur H_{E} de la partie 16, 26 qui s'évase par rapport à la hauteur totale H_{T} compris entre 0,1 et 0,95. De plus, la même section visible aux figures 2 et 9 comporte un rapport (L_{E}/L_{T}) de la largeur L_{E} de la partie 16, 26 qui s'évase par rapport à la largeur totale L_{T} compris entre 0,1 et 0,95.

La variante illustrée à la figure 9 étant appliquée préférentiellement pour éviter les erreurs de manipulation lors de la fabrication, les rapports H_{E'}/H_{T} et L_{E'}/L _{T} de la deuxième partie 28 qui s'évase de manière conique en s'éloignant de la partie droite 20 sont donc identiques respectivement aux rapports H_{E}/H_{T} et L_{E}/L_{T} de la deuxième partie 26 qui s'évase de manière conique en s'éloignant de la partie droite 20.

Toutefois, en perdant l'avantage de pouvoir monter indifféremment la face inférieure 22 et la face supérieure 21, la variante de la figure 9 peut être modifiée afin que l'élément de blocage 19 ne soit pas symétrique, c'est-à-dire ne comporte pas de parties évasées 26 et 28 identiques de chaque côté de la partie droite 20 de la paroi interne autour du trou 18.

Selon une autre préférence, l'élément de blocage 9, 19, 109, 129, 209 est chanfreiné afin d'éviter tout bris du deuxième matériau à base de matériau ne comportant pas ou peu de domaine plastique. En effet, comme expliqué ci-dessous suivant la géométrie de la déformation intermédiaire, un chanfrein peut éviter que l'élément de blocage 9, 19, 109, 129, 209 entre en contact sur la surface supérieure de la pièce 5, 105, 205 par une arête vive propre à générer trop de contrainte et/ou de pression sur une surface minimale.

Ainsi, avantageusement selon l'invention, ledit au moins un premier matériau formé pour l'organe 3, 103, 123, 203 peut comporter une grande variété de matériau comme, par exemple, un métal ou un alliage métallique.

Le procédé de fabrication d'un premier mode de réalisation de système d'assemblage 1 selon l'invention illustré à la figure 10 est expliqué ci-dessous en référence aux figures 3 à 8.

Le procédé comporte une première étape a) consistant à former chaque partie du système d'assemblage 1. Ainsi, l'étape a) comporte une phase destinée à former un organe 3 en au moins un premier matériau comportant un axe 2 et une portée 4 venus de forme ou non et une deuxième phase destinée à former une pièce 5 en deuxième matériau à base de matériau ne comportant pas ou peu de domaine plastique avec une ouverture 6.

Enfin, l'étape a) comporte une troisième phase destinée à former un élément de blocage 9 en forme de rondelle à base d'un troisième matériau dont le trou 8 est plus petit que l'axe 2 de l'organe 3 et dont la paroi interne comporte une partie 10 sensiblement droite sur une partie H_{T}-H_{E} de la hauteur H_{T} de l'élément de blocage 9 et une partie 16 qui s'évase de manière conique en s'éloignant de la partie droite 10. On comprend que lors de l'étape a), l'ordre d'exécution des phases n'a aucune importance.

Le procédé se poursuit avec une deuxième étape b) consistant à passer sans contrainte l'axe 2 de l'organe 3 dans l'ouverture 6 de la pièce 5. Cette étape b) est visualisable à la figure 4.

L'étape c) continue le procédé et comporte une première phase destinée à poser l'axe 2 contre le trou 8 de l'élément de blocage 9 en prenant la précaution que la partie 16 qui s'évase soit en face de la pièce 5. En effet, un montage inverse ne permet pas le montage. Cette première phase de l'étape c) est également visualisable à la figure 4.

A cette figure 4, on remarque également un outil 15. Cet outil 15 est préférentiellement plat, c'est-à-dire comporte une surface 14 sensiblement plane destinée à entrer en contact avec la face supérieure 11 de l'élément de blocage 9. On remarque ainsi que seule la variante de l'élément de blocage 19 qui est symétrique comme illustré à la figure 9, permet d'éliminer les erreurs de montage entre la face supérieure 11 et la face inférieure 12.

L'étape c) se poursuit avec une deuxième phase destinée à glisser à force l'élément de blocage 9 contre l'axe 2 à l'aide de l'outil 15 afin de déformer l'élément de blocage 9 pour que la partie périphérique 13 de l'élément de blocage 9 soit la plus proche de la pièce 5 comme illustré à la figure 5. On comprend que cette deuxième phase pourrait s'apparenter à un chassage.

Cette déformation intermédiaire élastique, pouvant occasionner des déformations plastiques ponctuelles au niveau de la partie droite 10, donne l'impression que l'élément de blocage 9 est une rondelle de Belleville. Toutefois, cette géométrie n'est pas stable, c'est-à-dire pas une déformation plastique comme un fluage, et uniquement induite par la force de l'outil 15. Cette déformation intermédiaire élastique est rendue maximale par l'utilisation du trou 8 de l'élément de blocage 9 plus petit que l'axe 2 de l'organe 3 et l'utilisation de l'outil 15 dont la surface 14 est sensiblement plane.

Cette déformation intermédiaire élastique apporte une très grande importance pour le futur système d'assemblage 1 en ce qu'elle applique la future contrainte axiale à la pièce 5 comme illustré à la figure 6, non pas au plus près de l'axe 2 mais, via le bras de levier de largeur L_{T} de l'élément de blocage 9, au niveau de la partie périphérique 13 de l'élément de blocage 9. On comprend donc que la section de la portée 4 de l'organe 3 doit également être préférablement sensiblement égale ou supérieure à celle de l'élément de blocage 9 afin de permettre à la partie périphérique 13 d'exercer une force axiale et élastique à l'aplomb de la portée 4 de l'organe 3.

De manière simple, le procédé se termine par l'étape d) consistant à arrêter et retirer l'outil 15 lorsqu'une force prédéfinie et inférieure à la contrainte de limite élastique du troisième matériau, est atteinte entre l'outil 15 et la portée 4 de l'organe 3. En effet, une fois le pincement élastique opéré entre la partie périphérique 13 de l'élément de blocage 9 à l'aplomb de la portée 4 de l'organe 3, l'outil 15 est utilisé pour rapprocher la partie droite 10 de la paroi interne au plus près de la pièce 5 sans dépasser, au niveau de la partie périphérique 12, 13, la contrainte de limite élastique du troisième matériau utilisé pour l'élément de blocage 9.

On comprend donc, qu'une fois l'outil 15 retiré, il n'est pas souhaité que toute la largeur (L_{T}-L_{E}) de la face inférieure 12 de l'élément de blocage 9 exerce une contrainte contre la pièce 5 mais uniquement ou principalement sa partie périphérique 13. On comprend immédiatement que la partie périphérique 13, 23 en contact avec la pièce 5, 105, 205 peut être ainsi directement limitée à la face inférieure 12, 22 par la valeur de la largeur L_{E} choisie pour la partie évasée 16, 26.

La solidarisation de l'ensemble organe 3 - pièce 5 - élément de blocage 9 est donc exercée uniquement ou principalement par une force axiale et élastique de la partie périphérique 13 ou de la face inférieure 12 de l'élément de blocage 9 à l'aplomb de la portée 4 de l'organe 3 conjugué au serrage radial de la partie droite 10 de la paroi interne de l'élément de blocage 9 contre l'axe 2 de l'organe 3.

La figure 3 est une représentation graphique de la force appliquée par l'outil 15 lors du procédé ci-dessus en fonction de la position axiale de l'outil 15. A partir de la flèche A, la deuxième phase de l'étape c) commence comme illustré à la figure 5. A partir de la flèche B, la partie périphérique 13 de l'élément de blocage 9 commence à pincer la pièce 5 comme illustré à la figure 6. A partir de la flèche C, la partie droite 10 de la paroi interne de l'élément de blocage 9 est rapprochée au maximum de la pièce 5 comme illustré à la figure 7 et toute force supplémentaire de l'outil 15 exerce une contrainte interne de l'élément de blocage 9 sans impact sur la géométrie de l'élément de blocage 9.

On comprend donc que les étapes du procédé de fabrication ainsi que les éléments du système d'assemblage sont très simples et très faciles à mettre en œuvre. Ainsi, selon un premier mode de réalisation illustré à la figure 10, il est possible de fixer un spiral 5 sur un axe 2 de balancier, à l'aide d'un système d'assemblage 1 selon l'invention. Pour ce faire, la virole 7 du spiral est solidarisée entre le pivot 3 et l'élément de blocage 9.

Afin de minimiser le risque de déformation plastique de l'élément de blocage 9, 109, 129, 209, l'étape d) est arrêtée lorsque la force appliquée par l'outil 15 est comprise entre 20% et 90% de la contrainte de limite élastique du troisième matériau. Bien entendu, le pourcentage doit être adapté suivant l'application envisagée. Lors des tests, il est apparu que l'arrêt de l'étape d) a donné entière satisfaction lorsque la force appliquée par l'outil 15 est sensiblement égale à 75% de la contrainte de limite élastique du troisième matériau.

Comme expliqué ci-dessus, le montage élastique de l'élément de blocage 9, 19, 109, 129, 209 est avantageusement obtenu en utilisant un troisième matériau qui comporte un métal ou un alliage métallique dont la résistance à la relaxation est au moins égale à 50% de la force appliquée.

Les tests permettant de déterminer ce pourcentage ont été effectués après 10'000 heures à une température de 70°C et sous une force de 75% de la contrainte nécessaire à obtenir 0,2% de déformation plastique.

La résistance supérieure à 50% a été observée quand le troisième matériau comporte du cuivre, du laiton, du maillechort, de l'alliage arcap, et même supérieure à 85%, quand le troisième matériau comporte de l'alliage pfinodal, de l'alliage spinodal, de l'alliage durnico, de l'alliage durimphy, de l'alliage Cu-Be et de l'acier 20AP.

Pour des considérations propres à l'horlogerie, l'élément de blocage 9, 19, 109, 129, 209 est, de manière encore plus préférée, choisi parmi les matériaux ci-dessus qui ne possèdent pas de matériau ferromagnétique afin d'être peu sensibles aux champs magnétiques, c'est-à-dire le cuivre, le laiton, le maillechort, l'alliage arcap, l'alliage pfinodal, l'alliage spinodal, l'alliage Cu-Be et l'alliage durimphy.

Comme mieux visible aux figures 1 et 2, préférentiellement selon l'invention, la section selon un plan de coupe axial de l'élément de blocage 9, 19, 109, 129, 209 comporte un rapport (H_{T}/L_{T}) de la hauteur H_{T} par rapport à la largeur L_{T} compris entre 0,1 et 5. Ainsi, il est important de bien choisir la longueur L_{T} pour avoir une partie périphérique 13, 23 suffisamment éloignée du centre de l'axe D pour obtenir un bras de levier suffisamment élevé pour offrir une contrainte suffisante à la solidarisation. Dans le même temps, une hauteur H_{T} doit être également bien choisie pour avoir une hauteur minimale pour suffisamment protéger le deuxième matériau ne comportant pas ou peu de domaine plastique et une hauteur maximale pour toujours obtenir la déformation intermédiaire expliquée ci-dessous. On comprend donc que le rapport H_{T}/L_{T} doit être adapté suivant les applications prévues.

De plus, la géométrie de la partie évasée 16, 26 de l'élément de blocage 9, 19, 109, 129, 209 donne également la possibilité de personnaliser la hauteur H_{E} et la largeur L_{E} sur lesquelles la partie 16, 26 s'évase à partir de la partie droite 10, 20. On comprend immédiatement que la partie périphérique 13, 23 en contact avec la pièce 5, 105, 205 peut être ainsi directement limitée à la face inférieure 12, 22 par la valeur de la largeur L_{E} choisie pour la partie évasée 16, 26.

Préférentiellement, la section selon un plan de coupe axial de l'élément de blocage 9, 19, comme visible aux figures 2 et 9, comporte un rapport (H_{E}/H_{T}) de la hauteur H_{E} de la partie 16, 26 qui s'évase par rapport à la hauteur totale H_{T} compris entre 0,1 et 0,95. De plus, la même section visible aux figures 2 et 9 comporte un rapport (L_{E}/L_{T}) de la largeur L_{E} de la partie 16, 26 qui s'évase par rapport à la largeur totale L_{T} compris entre 0,1 et 0,95.

La variante illustrée à la figure 9 étant appliquée préférentiellement pour éviter les erreurs de manipulation lors de la fabrication, les rapports H_{E'}/H_{T} et L_{E'}/L_{T} de la deuxième partie 28 qui s'évase de manière conique en s'éloignant de la partie droite 20 sont donc identiques respectivement aux rapports H_{E}/H_{T} et L_{E}/L_{T} de la deuxième partie 26 qui s'évase de manière conique en s'éloignant de la partie droite 20.

Toutefois, en perdant l'avantage de pouvoir monter indifféremment la face inférieure 22 et la face supérieure 21, la variante de la figure 9 peut être modifiée afin que l'élément de blocage 19 ne soit pas symétrique, c'est-à-dire ne comporte pas de parties évasées 26 et 28 identiques de chaque côté de la partie droite 20 de la paroi interne autour du trou 18.

Selon une autre préférence, l'élément de blocage 9, 19, 109, 129, 209 est chanfreiné afin d'éviter tout bris du deuxième matériau. En effet, comme expliqué ci-dessus suivant la géométrie de la déformation intermédiaire, un chanfrein peut éviter que l'élément de blocage 9, 19, 109, 129, 209 entre en contact sur la surface supérieure de la pièce 5, 105, 205 par une arête vive propre à générer trop de contrainte sur une surface minimale.

Ainsi, avantageusement selon l'invention, ledit au moins un premier matériau formé pour l'organe 3, 103, 123, 203 peut comporter une grande variété de matériau comme, par exemple, un métal ou un alliage métallique. On comprend donc que l'axe 2, 102, 122, 202 et la portée 4 peuvent être venus de forme à l'aide d'un unique premier matériau ou que l'axe 2, 102, 122, 202 et la portée 4 de l'organe 3, 103, 123, 203 peuvent être formés à partir de plusieurs matériaux et/ou plusieurs parties

On comprend également que, grâce au procédé selon l'invention, le deuxième matériau à base de matériau ne comportant pas ou peu de domaine plastique peut comporter, notamment, du silicium, du quartz, du corindon, de l'oxyde de silicium, du nitrure de silicium ou carbure de silicium sans risque de bris.

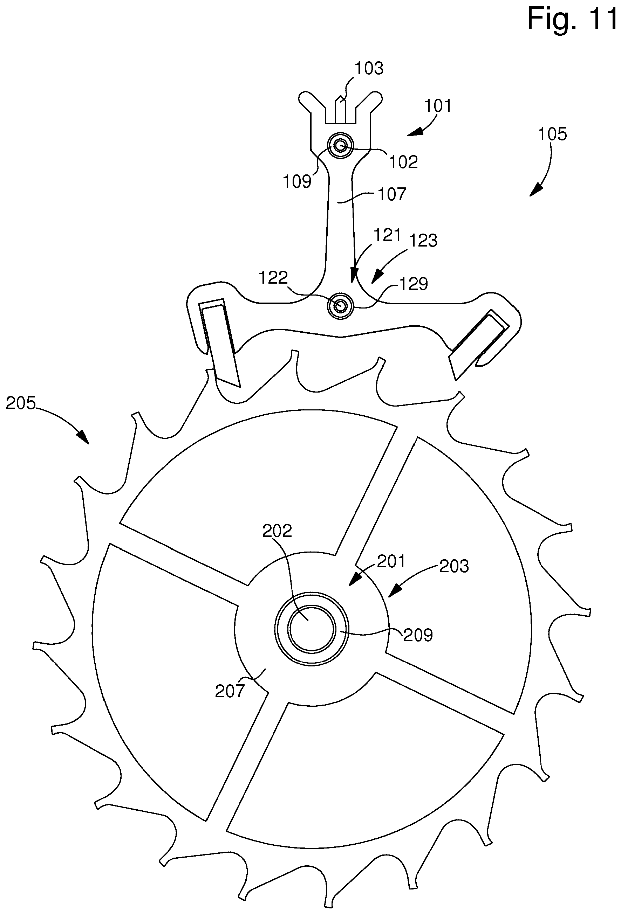

La figure 11 montre d'autres modes de réalisation de systèmes d'assemblage 101, 121, 201 selon l'invention dans le domaine de l'horlogerie. Une ancre 105, à titre d'exemple, peut comporter deux systèmes d'assemblage 101, 121 selon l'invention destinés respectivement à solidariser le dard 103 et la tige 123, avec la baguette 107.

Comme visible à la figure 11, chaque système d'assemblage 101, 121 comporte la baguette 107 qui est solidarisée entre l'axe 102 du dard 103 ou l'axe 122 de la tige 123 et l'élément de blocage 109, 129. On comprend donc que chaque système d'assemblage 101, 121 est suffisamment résistant pour ne pas générer de mouvements relatifs entre ses constituants.

A la même figure, une roue d'échappement, et plus généralement la roue 205, comporte, à titre d'exemple, un système d'assemblage 201 destiné à solidariser un pivot 203, avec la roue 205. Comme visible à la figure 11, le système d'assemblage 201 comporte un moyeu 207 qui est solidarisé entre l'axe 202 du pivot 203 et l'élément de blocage 209.

On comprend donc immédiatement que l'exemple de système d'assemblage 201 peut s'appliquer à tout type de mobile. De plus, l'axe 202 peut comporter en une seule pièce un pignon afin de former un mobile fini.

Bien entendu, la présente invention ne se limite pas à l'exemple illustré mais est susceptible de diverses variantes et modifications qui apparaîtront à l'homme de l'art. En particulier, l'élément de blocage 9, 19, 109, 129, 209 peut comporter une géométrie différente sans sortir du cadre de l'invention.

L'outil 15 pourrait également comporter une surface 14 sensiblement conique pour suivre sensiblement la forme de rondelle de Belleville obtenue lors de la déformation élastique intermédiaire.

De plus, l'ouverture 6 de la pièce 5, 105, 205 ne saurait se limiter à une forme circulaire et/ou la pièce 5, 105, 205 peut être partiellement ajourée en dessous de l'élément de blocage 9, 19, 109, 129, 209. Ainsi, à titre d'exemple, le spiral 5 de la figure 10 pourrait être remplacé par le spiral 10 comportant une virole 41 dont l'ouverture est sensiblement en forme de trèfle du document EP 2 363 762 sans enlever les avantages cités ci-dessus.

Enfin, d'autres matériaux « fragiles » que ceux à base de silicium ou d'alumine sont envisageables comme, par exemple, des céramiques à base de zirconium ou de titane, ou des verres. L'élément de blocage 9, 19, 109, 129, 209 peut également être formé à base de métaux amorphes également appelés verres métalliques.

## Revendications

1. Système d'assemblage (1, 101, 121, 201) comportant un organe (3, 103, 123, 203) en au moins un premier matériau comportant un axe (2, 102, 122, 202) et une portée (4), une pièce (5, 105, 205) en un deuxième matériau à base de matériau ne comportant pas ou peu de domaine plastique et comportant du silicium, du quartz, de l'oxyde de silicium, du nitrure de silicium ou carbure de silicium, ledit deuxième matériau étant muni d'une ouverture (6), l'axe (2, 102, 122, 202) de l'organe (3, 103, 123, 203) étant reçu dans l'ouverture (6) de la pièce (5, 105, 205) dans lequel le système d'assemblage (1, 101, 121, 201) comporte en outre une rondelle (9, 19, 109, 129, 209) en un troisième matériau comportant un métal ou un alliage métallique dont la résistance à la relaxation est au moins égale à 50% de la force appliquée, le troisième matériau étant agencé pour attacher élastiquement la pièce (5, 105, 205) entre la portée (4) dudit organe et la rondelle (9, 19, 109, 129, 209) et dans lequel la rondelle comporte une paroi interne comprenant une partie (10) sensiblement droite sur une partie de la hauteur (H_{T}) de la rondelle (9, 19, 109, 129, 209) qui serre radialement l'axe (2, 102, 122, 202) dudit organe, ladite paroi interne comportant, adjacente à la partie (10) sensiblement droite, une partie (16, 26, 28) qui s'évase de manière conique en se rapprochant de la pièce (5, 105, 205) en un deuxième matériau afin que seule la partie périphérique (13, 23) de la rondelle (9, 19, 109, 129, 209) exerce une force axiale et élastique à l'aplomb de la portée (4) dudit organe afin de rendre solidaire l'ensemble organe (3, 103, 123, 203) - pièce (5, 105, 205) - rondelle (9, 19, 109, 129, 209).

2. Système d'assemblage (1, 101, 121, 201) selon la revendication précédente, **caractérisé en ce que** le troisième matériau comporte un métal ou un alliage métallique dont la résistance à la relaxation, après 10'000 heures à une température de 70°C, est au moins égale à 50% de la force appliquée représentant 75% de la contrainte nécessaire à obtenir 0,2% de déformation plastique du troisième matériau afin de maintenir la solidarisation de l'ensemble organe (3, 103, 123, 203) - pièce (5, 105, 205) rondelle (9, 19, 109, 129, 209).

3. Système d'assemblage (1, 101, 121, 201) selon la revendication précédente, **caractérisé en ce que** le troisième matériau comporte du cuivre, du laiton, du maillechort, ou de l'alliage Cu-Be.

4. Système d'assemblage (1, 101, 121, 201) selon l'une des revendications précédentes, **caractérisé en ce que** la section selon un plan de coupe axial de la rondelle (9, 19, 109, 129, 209) comporte un rapport (H_{T}/L_{T}) de la hauteur (H_{T}) par rapport à la largeur (L_{T}) de la rondelle compris entre 0,1 et 5.

5. Système d'assemblage (1, 101, 121, 201) selon l'une des revendications précédentes, **caractérisé en ce que** la section selon un plan de coupe axial de la rondelle (9, 19, 109, 129, 209) comporte un rapport (H_{E}/H_{T}, H_{E'}/H_{T}) de la hauteur (H_{E}, H_{E'}) de la partie (16, 26, 28) qui s'évase par rapport à la hauteur totale (H_{T}) compris entre 0,1 et 0,95.

6. Système d'assemblage (1, 101, 121, 201) selon l'une des revendications précédentes, **caractérisé en ce que** la section selon un plan de coupe axial de la rondelle (9, 19, 109, 129, 209) comporte un rapport (L_{E}/L_{T}, L_{E'}/L_{T}) de la largeur (L_{E}, L_{E'}) de la partie (16, 26, 28) qui s'évase par rapport à la largeur totale (L_{T}) compris entre 0,1 et 0,95.

7. Système d'assemblage (1, 101, 121, 201) selon l'une des revendications précédentes, **caractérisé en ce que** la paroi interne comporte, symétriquement à la partie (10) sensiblement droite, une deuxième partie (28) qui s'évase de manière conique en s'éloignant de la pièce (5, 105, 205) en un deuxième matériau.

8. Système d'assemblage (1, 101, 121, 201) selon l'une des revendications précédentes, **caractérisé en ce que** la rondelle (9, 19, 109, 129, 209) est chanfreinée afin d'éviter tout bris du deuxième matériau.

9. Système d'assemblage (1, 101, 121, 201) selon l'une des revendications précédentes, **caractérisé en ce que** le deuxième matériau est à base de silicium.

10. Système d'assemblage (1, 101, 121, 201) selon l'une des revendications précédentes, **caractérisé en ce que** ledit au moins un premier matériau comporte un métal ou un alliage métallique.

11. Système d'assemblage (1, 101, 121, 201) selon l'une des revendications précédentes, **caractérisé en ce que** l'axe (2, 102, 122, 202) et la portée (4) sont venus de forme.

12. Pièce d'horlogerie **caractérisée en ce qu'**elle comporte au moins un système d'assemblage (1, 101, 121, 201) selon l'une des revendications précédentes.

13. Pièce d'horlogerie selon la revendication précédente, **caractérisée en ce que** la pièce en un deuxième matériau est un mobile (205), une ancre (105) ou un spiral (5).

14. Procédé de fabrication d'un système d'assemblage (1, 101, 121, 201) comportant les étapes suivantes :
a) former un organe (3, 103, 123, 203) en au moins un premier matériau comportant un axe (2, 102, 122, 202) et une portée (4), une pièce (5, 105, 205) en deuxième matériau à base de matériau ne comportant pas ou peu de domaine plastique et comportant du silicium, du quartz, de l'oxyde de silicium, du nitrure de silicium ou carbure de silicium, ledit deuxième matériau étant muni d'une ouverture (6) et une rondelle (9, 19, 109, 129, 209) à base d'un troisième matériau comportant un métal ou un alliage métallique dont la résistance à la relaxation est au moins égale à 50% de la force appliquée, la rondelle comportant un trou (8, 18) qui est plus petit que l'axe (2, 102, 122, 202) dudit organe, une surface n'excédant pas celle de la portée dudit organe et dont la paroi interne comporte une partie (10) sensiblement droite sur une partie de la hauteur (H_{T}) de la rondelle (9, 19, 109, 129, 209) et une partie (16, 26, 28) qui s'évase de manière conique en s'éloignant de la partie (10) sensiblement droite ;
b) passer sans contrainte l'axe (2, 102, 122, 202) dudit organe dans l'ouverture (6) de la pièce (5, 105, 205) ;
c) poser l'axe contre le trou de la rondelle, ladite partie qui s'évase (16, 26, 28) faisant face à la pièce (5, 105, 205) et glisser à force la rondelle (9, 19, 109, 129, 209) contre l'axe (2, 102, 122, 202) en appliquant une force à l'aide d'un outil (15) afin de déformer la rondelle (9, 19, 109, 129, 209) au niveau de la partie (10) sensiblement droite de sa paroi interne pour que la partie périphérique (13, 23) de la rondelle (9, 19, 109, 129, 209) soit la plus proche de la pièce (5, 105, 205) ;
d) arrêter puis retirer ledit outil lorsqu'une force prédéfinie et inférieure à la contrainte de limite élastique du troisième matériau est atteinte entre l'outil (15) et la portée (4) dudit organe.

15. Procédé de fabrication selon la revendication précédente, **caractérisé en ce que** l'étape d) est arrêtée lorsque la force appliquée par ledit outil est comprise entre 20% et 90% de la contrainte de limite élastique du troisième matériau.

16. Procédé de fabrication selon la revendication 14 ou 15, **caractérisé en ce que** le troisième matériau comporte un métal ou un alliage métallique dont la résistance à la relaxation, après 10'000 heures à une température de 70°C, est au moins égale à 50% de la force appliquée lors de l'étape d) représentant 75% de la contrainte nécessaire à obtenir 0,2% de déformation plastique du troisième matériau afin de maintenir la solidarisation de l'ensemble organe (3, 103, 123, 203) - pièce (5, 105, 205) - rondelle (9, 19, 109, 129, 209).

17. Procédé de fabrication selon la revendication précédente, **caractérisé en ce que** le troisième matériau comporte du cuivre, du laiton, du maillechort ou de l'alliage Cu-Be.

18. Procédé de fabrication selon l'une des revendications 14 à 17, **caractérisé en ce que** la section selon un plan de coupe axial de la rondelle (9, 19, 109, 129, 209) comporte un rapport (H_{T}/L_{T}) de la hauteur (H_{T}) par rapport à la largeur (L_{T}) de la rondelle comprise entre 0,1 et 5.

19. Procédé de fabrication selon l'une des revendications 14 à 18, **caractérisé en ce que** la section selon un plan de coupe axial de la rondelle (9, 19, 109, 129, 209) comporte un rapport (H_{E}/H_{T}, H_{E'}/H_{T}) de la hauteur (H_{E}, H_{E'}) de la partie (16, 26, 28) qui s'évase par rapport à la hauteur totale (H_{T}) compris entre 0,1 et 0,95.

20. Procédé de fabrication selon l'une des revendications 14 à 19, **caractérisé en ce que** la section selon un plan de coupe axial de la rondelle (9, 19, 109, 129, 209) comporte un rapport (L_{E}/L_{T}, L_{E'}/L_{T}) de la largeur (L_{E}, L_{E'}) de la partie (16, 26, 28) qui s'évase par rapport à la largeur totale (L_{T}) compris entre 0,1 et 0,95.

21. Procédé de fabrication selon l'une des revendications 14 à 20, **caractérisé en ce que** la paroi interne de la rondelle (9, 19, 109, 129, 209) comporte, symétriquement à la partie (10) sensiblement droite, une deuxième partie (28, 26) qui s'évase de manière conique en s'éloignant de la partie (10) sensiblement droite.

22. Procédé de fabrication selon l'une des revendications 14 à 21, **caractérisé en ce que** la rondelle (9, 19, 109, 129, 209) est chanfreinée afin d'éviter tout bris du deuxième matériau.

23. Procédé de fabrication selon l'une des revendications 14 à 22, **caractérisé en ce que** le deuxième matériau est à base de silicium.

24. Procédé de fabrication selon la revendication précédente, **caractérisé en ce que** le deuxième matériau comporte du quartz, de l'oxyde de silicium, du nitrure de silicium ou carbure de silicium.

25. Procédé de fabrication selon l'une des revendications 14 à 24, **caractérisé en ce que** ledit au moins un premier matériau comporte un métal ou un alliage métallique.

26. Procédé de fabrication selon l'une des revendications 14 à 25, **caractérisé en ce que** la pièce est un mobile d'horlogerie (205).

27. Procédé de fabrication selon l'une des revendications 14 à 25, **caractérisé en ce que** la pièce est une ancre d'horlogerie (105).

28. Procédé de fabrication selon l'une des revendications 14 à 25, **caractérisé en ce que** la pièce est un spiral d'horlogerie (5).

## Patentansprüche

1. Montagesystem (1, 101, 121, 201) mit einem Organ (3, 103, 123, 203) aus mindestens einem ersten Material, umfassend eine Achse (2, 102, 122, 202) und eine Schulter (4), ein Teil (5, 105, 205) aus einem zweiten Material, das wenig oder keinen Kunststoff umfasst und Silizium, Quarz, Siliziumdioxid, Siliziumnitrid oder Siliziumkarbid umfasst, wobei das zweite Material eine Öffnung (6) aufweist, wobei die Achse (2, 102, 122, 202) des Organs (3, 103, 123, 203) in der Öffnung (6) des Teils (5, 105, 205) gehalten wird, wobei das Montagesystem (1, 101, 121, 201) ferner eine Unterlegscheibe (9, 19, 109, 129, 209) aus einem dritten Material umfasst, das ein Metall oder eine Metalllegierung umfasst, dessen/deren Entspannungswiderstand mindestens gleich 50 % der aufgebrachten Kraft ist, wobei das dritte Material so angeordnet ist, dass es das Teil (5, 105, 205) zwischen der Schulter (4) des Organs und der Unterlegscheibe (9, 19, 109, 129, 209) elastisch befestigt, und wobei die Unterlegscheibe eine Innenwand umfasst, die einen im Wesentlichen geraden Abschnitt (10) über einen Teil der Höhe (H_{T}) der Unterlegscheibe (9, 19, 109, 129, 209) umfasst, der die Achse (2, 102, 122, 202) des Organs radial greift, wobei die Innenwand angrenzend an den im Wesentlichen geraden Abschnitt (10) einen Abschnitt (16, 26, 28) umfasst, der sich zu dem Teil (5, 105, 205) aus einem zweiten Material hin konisch erweitert, sodass nur der Umfangsabschnitt (13, 23) der Unterlegscheibe (9, 19, 109, 129, 209) eine axiale elastische Kraft senkrecht zu der Schulter (4) des Organs ausübt, um die Anordnung aus Organ (3, 103, 123, 203), Teil (5, 105, 205) und Unterlegscheibe (9, 19, 109, 129, 209) zu befestigen.

2. Montagesystem (1, 101, 121, 201) nach dem vorhergehenden Anspruch, **dadurch gekennzeichnet, dass** das dritte Material ein Metall oder eine Metalllegierung umfasst, dessen/deren Entspannungswiderstand nach 10.000 Stunden bei einer Temperatur von 70 °C mindestens gleich 50 % der aufgebrachten Kraft ist, die 75 % der Dehnung darstellt, die erforderlich ist, um eine plastische Verformung des dritten Materials von 0,2 % zu erhalten, um die Anordnung aus Organ (3, 103, 123, 203), Teil (5, 105, 205) und Unterlegscheibe (9, 19, 109, 129, 209) zusammenzuhalten.

3. Montagesystem (1, 101, 121, 201) nach dem vorhergehenden Anspruch, **dadurch gekennzeichnet, dass** das dritte Material Kupfer, Messing, Nickelsilber oder eine Cu-Be-Legierung umfasst.

4. Montagesystem (1, 101, 121, 201) nach einem der vorhergehenden Ansprüche, **dadurch gekennzeichnet, dass** der Querschnitt einer axialen Ebene der Unterlegscheibe (9, 19, 109, 129, 209) ein (H_{T}/L_{T})-Verhältnis der Höhe (H_{T}) zur Breite (L_{T}) der Unterlegscheibe zwischen 0,1 und 5 umfasst.

5. Montagesystem (1, 101, 121, 201) nach einem der vorhergehenden Ansprüche, **dadurch gekennzeichnet, dass** der Querschnitt einer Axialebene der Unterlegscheibe (9, 19, 109, 129, 209) ein (H_{E}/H_{T}, H_{E'}/H_{T})-Verhältnis der Höhe (H_{E}, H_{E'}) des erweiterten Abschnitts (16, 26, 28) zu der Gesamthöhe (H_{T}) zwischen 0,1 und 0,95 umfasst.

6. Montagesystem (1, 101, 121, 201) nach einem der vorhergehenden Ansprüche, **dadurch gekennzeichnet, dass** der Querschnitt einer Axialebene der Unterlegscheibe (9, 19, 109, 129, 209) ein (L_{E}/L_{T}, L_{E'}/L_{T})-Verhältnis der Breite (L_{E}, L_{E'}) des erweiterten Abschnitts (16, 26, 28) zu der Gesamtbreite (L_{T}) zwischen 0,1 und 0,95 umfasst.

7. Montagesystem (1, 101, 121, 201) nach einem der vorhergehenden Ansprüche, **dadurch gekennzeichnet, dass** die Innenwand symmetrisch zu dem im Wesentlichen geraden Abschnitt (10) einen zweiten Abschnitt (28) umfasst, der sich von dem Teil (5, 105, 205) aus einem zweiten Material weg konisch erweitert.

8. Montagesystem (1, 101, 121, 201) nach einem der vorhergehenden Ansprüche, **dadurch gekennzeichnet, dass** die Unterlegscheibe (9, 19, 109, 129, 209) abgeschrägt ist, um Brüche des zweiten Materials zu verhindern.

9. Montagesystem (1, 101, 121, 201) nach einem der vorhergehenden Ansprüche, **dadurch gekennzeichnet, dass** das zweite Material auf Silizium basiert.

10. Montagesystem (1, 101, 121, 201) nach einem der vorhergehenden Ansprüche, **dadurch gekennzeichnet, dass** das mindestens eine erste Material ein Metall oder eine Metalllegierung umfasst.

11. Montagesystem (1, 101, 121, 201) nach einem der vorhergehenden Ansprüche, **dadurch gekennzeichnet, dass** die Achse (2, 102, 122, 202) und die Schulter (4) einstückig ausgebildet sind.

12. Zeitmesser, **dadurch gekennzeichnet, dass** er mindestens ein Montagesystem (1, 101, 121, 201) nach einem der vorhergehenden Ansprüche umfasst.

13. Zeitmesser nach dem vorhergehenden Anspruch, **dadurch gekennzeichnet, dass** das Teil aus einem zweiten Material ein Drehteil (205), ein Ankerwerk (105) oder eine Unruhfeder (5) ist.

14. Verfahren zur Herstellung eines Montagesystems (1, 101, 121, 201), das die folgenden Schritte umfasst:
a) Bilden eines Organs (3, 103, 123, 203) aus mindestens einem ersten Material, umfassend eine Achse (2, 102, 122, 202) und eine Schulter (4), ein Teil (5, 105, 205) aus einem zweiten Material auf der Basis von Material, das wenig oder keinen Kunststoff enthält und Silizium, Quarz, Siliziumdioxid, Siliziumnitrid oder Siliziumkarbid enthält, wobei das zweite Material eine Öffnung (6) und eine Unterlegscheibe (9, 19, 109, 129, 209) aus einem dritten Material aufweist, das ein Metall oder eine Metalllegierung umfasst, dessen/deren Entspannungswiderstand mindestens gleich 50 % der aufgebrachten Kraft ist, wobei die Unterlegscheibe ein Loch (8, 18), das kleiner als die Achse (2, 102, 122, 202) des Organs ist, einen Oberflächenbereich, der nicht größer ist als der der Schulter des Organs und dessen Innenwand einen im Wesentlichen geraden Abschnitt (10) über einen Teil der Höhe (H_{T}) der Unterlegscheibe (9, 19, 109, 129, 209) aufweist, und einen Abschnitt (16, 26, 28), der sich von dem im Wesentlichen geraden Abschnitt (10) weg konisch erweitert, umfasst;
b) Einführen der Achse (2, 102, 122, 202) des Organs ohne Spannung in die Öffnung (6) des Teils (5, 105, 205);
c) Platzieren der Achse an das Loch in der Unterlegscheibe, wobei der erweiterte Abschnitt (16, 26, 28) dem Teil (5, 105, 205) zugewandt ist, und Verschieben der Unterlegscheibe (9, 19, 109, 129, 209) gegen die Achse (2, 102, 122, 202) unter Kraftaufwand durch Aufbringen einer Kraft mithilfe eines Werkzeugs (15), um die Unterlegscheibe (9, 19, 109, 129, 209) in dem im Wesentlichen geraden Abschnitt (10) ihrer Innenwand so zu verformen, dass der Umfangsabschnitt (13, 23) der Unterlegscheibe (9, 19, 109, 129, 209) dem Teil (5, 105, 205) am nächsten liegt;
d) Stoppen, dann Entfernen des Werkzeugs, wenn zwischen dem Werkzeug (15) und der Schulter (4) des Organs eine vordefinierte Kraft erreicht wird, die geringer ist als die Streckgrenze des dritten Materials.

15. Herstellungsverfahren nach dem vorhergehenden Anspruch, **dadurch gekennzeichnet, dass** Schritt d) gestoppt wird, wenn die von dem Werkzeug aufgebrachte Kraft zwischen 20 % und 90 % der Streckgrenze des dritten Materials liegt.

16. Herstellungsverfahren nach Anspruch 14 oder 15, **dadurch gekennzeichnet, dass** das dritte Material ein Metall oder eine Metalllegierung umfasst, dessen/deren Entspannungswiderstand nach 10.000 Stunden bei einer Temperatur von 70 °C mindestens gleich 50 % der in Schritt d) aufgebrachten Kraft ist, die 75 % der Dehnung darstellt, die erforderlich ist, um eine plastische Verformung des dritten Materials von 0,2 % zu erhalten, um die Anordnung aus Organ (3, 103, 123, 203), Teil (5, 105, 205) und Unterlegscheibe (9, 19, 109, 129, 209) zusammenzuhalten.

17. Herstellungsverfahren nach dem vorhergehenden Anspruch, **dadurch gekennzeichnet, dass** das dritte Material Kupfer, Messing, Nickelsilber oder eine Cu-Be-Legierung umfasst.

18. Herstellungsverfahren nach den Ansprüchen 14 bis 17, **dadurch gekennzeichnet, dass** der Querschnitt einer axialen Ebene der Unterlegscheibe (9, 19, 109, 129, 209) ein (H_{T}/L_{T})-Verhältnis der Höhe (H_{T}) zur Breite (L_{T}) der Unterlegscheibe zwischen 0,1 und 5 umfasst.

19. Herstellungsverfahren nach einem der Ansprüche 14 bis 18, **dadurch gekennzeichnet, dass** der Querschnitt einer Axialebene der Unterlegscheibe (9, 19, 109, 129, 209) ein (H_{E}/H_{T}, H_{E'}/H_{T})-Verhältnis der Höhe (H_{E}, H_{E'}) des erweiterten Abschnitts (16, 26, 28) zu der Gesamthöhe (H_{T}) zwischen 0,1 und 0,95 umfasst.

20. Herstellungsverfahren nach einem der Ansprüche 14 bis 19, **dadurch gekennzeichnet, dass** der Querschnitt einer Axialebene der Unterlegscheibe (9, 19, 109, 129, 209) ein (L_{E}/L_{T}, L_{E'}/L_{T})-Verhältnis der Breite (L_{E}, L_{E'}) des erweiterten Abschnitts (16, 26, 28) zu der Gesamtbreite (L_{T}) zwischen 0,1 und 0,95 umfasst.

21. Herstellungsverfahren nach einem der Ansprüche 14 bis 20, **dadurch gekennzeichnet, dass** die Innenwand der Unterlegscheibe (9, 19, 109, 129, 209) symmetrisch zu dem im Wesentlichen geraden Abschnitt (10) einen zweiten Abschnitt (28, 26) umfasst, der sich von dem im Wesentlichen geraden Abschnitt (10) weg konisch erweitert.

22. Herstellungsverfahren nach einem der Ansprüche 14 bis 21, **dadurch gekennzeichnet, dass** die Unterlegscheibe (9, 19, 109, 129, 209) abgeschrägt ist, um Brüche des zweiten Materials zu verhindern.

23. Herstellungsverfahren nach einem der Ansprüche 14 bis 22, **dadurch gekennzeichnet, dass** das zweite Material auf Silizium basiert.

24. Herstellungsverfahren nach dem vorhergehenden Anspruch, **dadurch gekennzeichnet, dass** das zweite Material Quarz, Siliziumoxid, Siliziumnitrid oder Siliziumkarbid umfasst.

25. Herstellungsverfahren nach einem der Ansprüche 14 bis 24, **dadurch gekennzeichnet, dass** das mindestens eine erste Material ein Metall oder eine Metalllegierung umfasst.

26. Herstellungsverfahren nach einem der Ansprüche 14 bis 25, **dadurch gekennzeichnet, dass** das Teil ein Uhrmachereidrehteil (205) ist.

27. Herstellungsverfahren nach einem der Ansprüche 14 bis 25, **dadurch gekennzeichnet, dass** das Teil ein Uhrmachereiankerwerk (105) ist.

28. Verfahren nach einem der Ansprüche 14 bis 25, **dadurch gekennzeichnet, dass** das Teil eine Uhrmachereiunruhfeder (5) ist.

## Claims

1. An assembly system (1, 101, 121, 201) comprising an organ (3, 103, 123, 203) made of at least a first material comprising an axis (2, 102, 122, 202) and a shoulder (4), a part (5, 105, 205) made of a second material, comprising little or no plastic and comprising silicon, quartz, silicon dioxide, silicon nitride or silicon carbide, said second material having an opening (6), the axis (2, 102, 122, 202) of the organ (3, 103, 123, 203) being held in the opening (6) of the part (5, 105, 205), in which the assembly system (1, 101, 121, 201) further comprises a washer (9, 19, 109, 129, 209) made of a third material comprising a metal or a metal alloy whose resistance to relaxation is at least equal to 50% of the applied force, the third material being arranged to elastically attach the part (5, 105, 205) between the shoulder (4) of said organ and the washer (9, 19, 109, 129, 209), and in which the washer comprises an internal wall comprising a substantially straight portion (10) over part of the height (H_{T}) of the washer (9, 19, 109, 129, 209) which radially grips the axis (2, 102, 122, 202) of said organ, said internal wall comprising, adjacent to the substantially straight portion (10), a portion (16, 26, 28) which flares conically towards the part (5, 105, 205) made of a second material so that only the peripheral portion (13, 23) of the washer (9, 19, 109, 129, 209) exerts an axial elastic force vertical to the shoulder (4) of said organ so as to secure the organ (3, 103, 123, 203) - part (5, 105, 205)- washer (9, 19, 109, 129, 209) assembly.

2. The assembly system (1, 101, 121, 201) according to the preceding claim, **characterised in that** the third material comprises a metal or a metal alloy whose resistance to relaxation, after 10,000 hours at a temperature of 70°C is at least equal to 50% of the applied force representing 75% of the strain necessary to obtain a 0.2% plastic distortion of the third material in order to hold the organ (3, 103, 123, 203) -part (5, 105, 205) -washer (9, 19, 109, 129, 209) assembly together.

3. The assembly system (1, 101, 121, 201) according to the preceding claim, **characterised in that** the third material comprises copper, brass, nickel silver, or Cu-Be alloy.

4. The assembly system (1, 101, 121, 201) according to any of the preceding claims, **characterised in that** the cross-section in an axial plane of the washer (9, 19, 109, 129, 209) comprises an (H_{T}/L_{T}) ratio of the height (H_{T}) to the width-(L_{T}) of the washer comprised between 0.1 and 5.

5. The assembly system (1, 101, 121, 201) according to any of the preceding claims, **characterised in that** the cross-section in an axial plane of the washer (9, 19, 109, 129, 209) comprises an (H_{E}/H_{T}, H_{E'}/H_{T}) ratio of the height (H_{E}, H_{E'}) of the flared portion (16, 26, 28) to the total height (H_{T}) comprised between 0.1 and 0.95.

6. The assembly system (1, 101, 121, 201) according to any of the preceding claims, **characterised in that** the cross-section in an axial plane of the washer (9, 19, 109, 129, 209) comprises an (L_{E}/L_{T}, L_{E'}/L_{T}) ratio of the width (L_{E}, L_{E'}) of the flared portion (16, 26, 28) to the total width (L_{T}) comprised between 0.1 and 0.95.

7. The assembly system (1, 101, 121, 201) according to any of the preceding claims, **characterised in that** the internal wall comprises, symmetrical to the substantially straight portion (10), a second portion (28) which flares conically away from the part (5, 105, 205) made of a second material.

8. The assembly system (1, 101, 121, 201) according to any of the preceding claims, **characterised in that** the washer (9, 19, 109, 129, 209) is chamfered to prevent any breakage of the second material.

9. The assembly system (1, 101, 121, 201) according to any of the preceding claims, **characterised in that** the second material is silicon-based.

10. The assembly system (1, 101, 121, 201) according to any of the preceding claims, **characterised in that** said at least one first material comprises a metal or a metal alloy.

11. The assembly system (1, 101, 121, 201) according to any of the preceding claims, **characterised in that** the axis (2, 102, 122, 202) and the shoulder (4) are made in one piece.

12. A timepiece **characterised in that** it comprises at least one assembly system (1, 101, 121, 201) according to any of the preceding claims.

13. The timepiece according to the preceding claim, **characterised in that** the part made of a second material is a mobile (205), a pallet (105) or a balance-spring (5).

14. A method of manufacturing an assembly system (1, 101, 121, 201) comprising the following steps:
a) forming an organ (3, 103, 123, 203) made of at least a first material including an axis (2, 102, 122, 202) and a shoulder (4), a part (5, 105, 205) made of a second material based on material comprising little or no plastic and comprising silicon, quartz, silicon dioxide, silicon nitride or silicon carbide, said second material having an opening (6) and a washer (9, 19, 109, 129, 209) made of a third material comprising a metal or a metal alloy whose resistance to relaxation is at least equal to 50% of the applied force, the washer comprising a hole (8, 18) which is smaller than the axis (2, 102, 122, 202) of said organ, a surface area no larger than that of the shoulder of said organ and whose internal wall has a substantially straight portion (10) over part of the height (H_{T}) of the washer (9, 19, 109, 129, 209) and a portion (16, 26, 28) which flares conically away from the substantially straight portion (10);
b) inserting the axis (2, 102, 122, 202) of said organ without strain into the opening (6) of the part (5, 105, 205);
c) placing the axis against the hole in the washer, said flared portion (16, 26, 28) facing the part (5, 105, 205), and forcibly sliding the washer (9, 19, 109, 129, 209) against the axis (2, 102, 122, 202) by applying force using a tool (15) in order to distort the washer (9, 19, 109, 129, 209) in the substantially straight portion (10) of its internal wall so that the peripheral portion (13, 23) of the washer (9, 19, 109, 129, 209) is closest to the part (5, 105, 205);
d) stopping, then removing said tool when a predefined force that is less than the yield strength of the third material is reached between the tool (15) and the shoulder (4) of said organ.

15. The manufacturing method according to the preceding claim, **characterised in that** step d) is stopped when the force applied by said tool is comprised between 20% and 90% of the yield strength of the third material.

16. The manufacturing method according to claim 14 or 15, **characterised in that** the third material comprises a metal or a metal alloy whose resistance to relaxation, after 10,000 hours at a temperature of 70°C is at least equal to 50% of the force applied in step d) representing 75% of the strain necessary to obtain a 0.2% plastic distortion of the third material in order to hold the organ (3, 103, 123, 203) - part (5, 105, 205) - washer (9, 19, 109, 129, 209) assembly together.

17. The manufacturing method according to the preceding claim, **characterised in that** the third material comprises copper, brass, nickel silver, or Cu-Be alloy .

18. The manufacturing method according to claims 14 to 17, **characterised in that** the cross-section in an axial plane of the washer (9, 19, 109, 129, 209) comprises an (H_{T}/L_{T}) ratio of the height (H_{T}) to the width-(L_{T}) of the washer comprised between 0.1 and 5.

19. The manufacturing method according to any of claims 14 to 18, **characterised in that** the cross-section in an axial plane of the washer (9, 19, 109, 129, 209) comprises an (H_{E}/H_{T}, H_{E'}/H_{T}) ratio of the height (H_{E}, H_{E'}) of the flared portion (16, 26, 28) to the total height (H_{T}) comprised between 0.1 and 0.95.

20. The manufacturing method according to any of claims 14 to 19, **characterised in that** the cross-section in an axial plane of the washer (9, 19, 109, 129, 209) comprises an (L_{E}/L_{T}, L_{E'}/L_{T}) ratio of the width (L_{E}, L_{E'}) of the flared portion (16, 26, 28) to the total width (L_{T}) comprised between 0.1 and 0.95.

21. The manufacturing method according to any of claims 14 to 20, **characterised in that** the internal wall of the washer (9, 19, 109, 129, 209) comprises, symmetrical to the substantially straight portion (10), a second portion (28, 26) which flares conically away from the substantially straight portion (10).

22. The manufacturing method according to any of claims 14 to 21, **characterised in that** the washer (9, 19, 109, 129, 209) is chamfered to prevent any breakage of the second material.

23. The manufacturing method according to any of claims 14 to 22, **characterised in that** the second material is silicon-based.

24. The manufacturing method according to the preceding claim, **characterised in that** the second material comprises quartz, silicon oxide, silicon nitride or silicon carbide.

25. The manufacturing method according to any of claims 14 to 24, **characterised in that** said at least one first material comprises a metal or a metal alloy.

26. The manufacturing method according to any of claims 14 to 25, **characterised in that** the part is a horology mobile (205).

27. The manufacturing method according to any of claims 14 to 25, **characterised in that** the part is a horology pallet (105).

28. The method according to any of claims 14 to 25, **characterised in that** the part is a horology balance-spring (5).
